# FASCICULE DE BREVET EUROPEEN

(11) **EP 3 641 960 B1**
(45) Date de publication et mention de la délivrance du brevet: **21.07.2021**
(21) Numéro de dépôt: 18732789.5
(22) Date de dépôt: 22.06.2018
(51) Int. Cl.: B21C 37/12, F16L 11/08, F16L 55/04

(54) **INSTALLATION POUR LA FABRICATION D'UNE STRUCTURE DE RENFORT D'UNE CONDUITE FLEXIBLE, PROCEDE ASSOCIE ET SYSTEME COMPRENANT LADITE INSTALLATION**
ANLAGE ZUR HERSTELLUNG EINER VERSTÄRKUNGSSTRUKTUR EINES BIEGSAMEN ROHRS, VERFAHREN DAFÜR UND SYSTEM MIT DIESER ANLAGE
INSTALLATION FOR MANUFACTURING A REINFORCING STRUCTURE OF A FLEXIBLE PIPE, METHOD THEREFOR AND SYSTEM COMPRISING SAID INSTALLATION

(30) Priorité: 22.06.2017 FR 1700679
(43) Date de publication de la demande: 29.04.2020
(73) Titulaire: TECHNIP N-POWER, 92400 Courbevoie (FR)
(72) Inventeur: SACILOTTO, Benoît, 27340 Pont De L'Arche (FR); BOUVIER, Michael, 76190 Valliquerville (FR); DESBAZEILLE, Etienne, 76170 Touffreville La Cable (FR)
(74) Mandataire: Lavoix
(86) Numéro de dépôt international: PCT/EP2018/066814
(87) Numéro de publication internationale: WO 2018/234563

(56) Documents cités:
- WO-A1-2014/167346
- WO-A1-2015/121316
- WO-A1-2015/121424
- US-A1- 2015 040 633

## Description

### Domaine technique de l'invention

L'invention concerne une installation pour la fabrication d'une structure de renfort d'une conduite flexible pour le transport d'un fluide pétrolier et/ou gazier en milieu sous-marin, le procédé associé et un système comprenant ladite installation.

Plus particulièrement, un domaine d'application envisagé est la fabrication d'une carcasse interne et/ou d'une voûte de pression de conduite flexible sous-marine destinée au transport de fluide pétrolier et/ou gazier.

### Etat de la technique

De manière générale, les conduites flexibles pour le transport d'un fluide pétrolier et/ou gazier en milieu sous-marin sont immergées au sein d'une étendue d'eau à des profondeurs pouvant dépasser 3000 m. Elles trouvent notamment leur intérêt dans l'acheminement de fluide pétrolier et/ou gazier entre une installation de fond et une installation de surface. Elles peuvent également être utilisées pour raccorder deux installations de fond. Certaines conduites flexibles peuvent par ailleurs être utilisées pour raccorder deux installations de surface.

La structure d'une conduite flexible est largement connue de l'art antérieur et est notamment décrite au sein des documents normatifs API RP 17B, 5ème édition, publié en Mai 2014 et API 17J, 4ème édition, publié en Mai 2014 par l'American Petroleum Institute.

Typiquement, une conduite flexible comporte une gaine interne d'étanchéité appelée plus communément « gaine de pression » (« pressure sheath » en langue anglaise) définissant un passage interne de circulation du fluide pétrolier et/ou gazier.

D'importants efforts de traction peuvent s'exercer sur la conduite flexible notamment lorsque celle-ci s'étend à travers de profondes étendues d'eau. Une nappe d'armures de traction est alors généralement agencée autour de la conduite flexible afin de reprendre ces efforts de traction. La nappe d'armures de traction est généralement composée d'une pluralité de couches d'éléments métalliques, généralement deux, enroulés en hélice.

Afin de prévenir la corrosion de ces éléments métalliques par l'eau de l'étendue d'eau, une gaine externe polymérique de protection est généralement agencée autour de la conduite flexible.

En outre, la conduite flexible est également soumise à une pression externe très élevée lorsqu'elle est immergée à grande profondeur, par exemple 250 bar lorsque la conduite est immergée à 2500 m de profondeur. Lorsque cette pression externe devient nettement supérieure à la pression interne, il existe un risque d'effondrement (« collapse » en langue anglaise) de la conduite flexible. Par ailleurs, le fluide pétrolier et/ou gazier transporté, est composé, en plus d'huiles et de particules solides, de gaz tels que du dioxyde de carbone (CO₂) et du disulfure d'hydrogène (H₂S). Ces gaz ont tendance à diffuser à travers la gaine interne d'étanchéité et à s'accumuler au sein de l'espace formé par la gaine interne d'étanchéité et la couche externe de protection, dit « espace annulaire » provoquant ainsi l'augmentation de la pression au sein dudit espace annulaire. Lorsque le passage interne de la conduite flexible est soumis à une décompression rapide, par exemple lors d'un arrêt brutal de la production (dit « shut down » en langue anglaise), les gaz contenus au sein de l'espace annulaire n'ont pas le temps de diffuser vers le passage interne de la conduite flexible. En conséquence, la pression au sein de l'espace annulaire peut devenir supérieure à la pression interne et ainsi conduire à l'effondrement de la gaine interne d'étanchéité. Pour prévenir ces risques d'effondrement, une structure de renfort est généralement disposée à l'intérieur de la conduite flexible. Cette structure de renfort interne, appelée plus communément carcasse ou carcasse interne, comprend un profilé principal enroulé avec un angle d'hélice d'une valeur absolue proche de 90°. De manière générale, la section du profilé principal est en forme de S. Ainsi, chacune des spires du profilé principal coopère avec une spire adjacente formant ainsi l'agrafage du profilé principal. La carcasse confère ainsi à la conduite flexible la résistance à l'effondrement.

Par ailleurs, il existe entre chaque spire des déjoints débouchant vers l'intérieur de la conduite flexible donnant à la surface interne de ladite conduite flexible un aspect rugueux. Les conduites flexibles comprenant une carcasse sont alors dites à passage non lisse (dit « rough bore » en langue anglaise). La présence des déjoints entraine des fluctuations de pression dans l'écoulement du fluide pétrolier et/ou gazier résultant en des phénomènes vibratoires, voire, lorsqu'une résonance est atteinte, en des phénomènes de pulsation induite par la circulation du fluide (dit « flow induced pulsation » en langue anglaise). Les pulsations induites par la circulation du fluide sont susceptibles de favoriser la fatigue des équipements connexes auxquels sont raccordés les conduites flexibles ainsi que la fatigue des moyens de connexions entre lesdites conduites flexibles (soudures, brides...). Or, une fatigue prématurée des équipements connexes et /ou des moyens de connexions peut conduire à des sinistres pouvant avoir de graves conséquences aussi bien humaines qu'économiques.

Une des solutions permettant de pallier les inconvénients susmentionnés consiste à combler les déjoints de la carcasse de la conduite flexible afin d'éviter les différentiels de pression lors de l'écoulement du fluide pétrolier et/ou gazier. A cette fin, une des stratégies consiste à fournir une carcasse dans laquelle les déjoints formés dans le profilé principal sont comblés par un profilé supplémentaire. Plus particulièrement, le pas d'enroulement et la section du profilé supplémentaire permettent de combler ces déjoints. Le profilé supplémentaire présente par exemple une section en forme de T ou de S et est inséré dans les déjoints. Nous pourrons notamment nous reporter aux demandes de brevet WO2015/121424 et WO2015/121316 de la présente Demanderesse dans lesquelles de tels modes de réalisation de la carcasse sont exemplifiés. Le préambule de la revendication 1 est basé sur la demande WO2015/121316.

La mise en oeuvre d'une carcasse comportant un profilé principal et un profilé supplémentaire permettant de combler les déjoints reste problématique. La demande de brevet WO2015/121424 propose par exemple d'utiliser une installation unique comprenant deux trains de profilage agencés sur un même plateau tournant permettant la mise en forme de feuillards métalliques destinés à former la carcasse. Les deux trains de profilage sont, selon les modes de réalisation décrits dans la demande de brevet WO2015/121424, superposés ou diamétralement opposés par rapport au plateau tournant. Puis, en aval des trains de profilage, le profilé principal et le profilé supplémentaire sont combinés et cintrés autour d'un mandrin pour former la carcasse. Le profilé principal et le profilé supplémentaire combinés sont notamment poussés jusqu'au mandrin par le biais d'organes moteurs situés en aval des trains de profilage. Les organes moteurs comprennent deux galets entrainés en rotation entre lesquels le profilé principal et le profilé supplémentaire combinés sont reçus et poussés jusqu'au mandrin.

La présence d'organes moteurs en aval des trains de profilage destinés à pousser le profilé principal et le profilé supplémentaire peut entrainer des problèmes d'assemblage de la carcasse. En effet, en aval des trains de profilage, et notamment sur le mandrin, il existe un différentiel de vitesse entre le profilé principal et le profilé supplémentaire. Le profilé supplémentaire est cintré autour du mandrin et constitue la couche la plus interne de la carcasse. Le profilé principal est cintré autour du profilé supplémentaire et constitue la couche la plus externe de la carcasse. Ainsi, la distance parcourue autour du mandrin et la longueur du profilé supplémentaire autour du mandrin est inférieure à la distance et la longueur du profilé principal. Or, en amont du mandrin, les organes moteurs poussent, ensemble, le profilé principal et le profilé supplémentaire avec une même vitesse. Ainsi, l'insertion du profilé supplémentaire au sein des spires formées par le profilé principal sur le mandrin ne se fait pas correctement. Par conséquent, des défauts géométriques dans la structure de renfort peuvent résulter d'une telle installation, et ainsi diminuer les performances mécaniques de la structure de renfort.

Aussi, en combinaison ou en alternative de la carcasse, la conduite flexible peut comprendre une structure de renfort agencée autour de la gaine interne d'étanchéité. En effet, dans le cas notamment où la pression du fluide circulant dans la conduite flexible peut être suffisamment élevée, une structure de renfort est ajoutée afin d'empêcher l'éclatement de la gaine interne d'étanchéité. Ce type de structure de renfort est connu dans le domaine de la présente invention sous les termes de « voûte de pression » (« pressure vault » en langue anglaise). Typiquement, la voûte de pression comprend un profilé principal, généralement métallique, présentant une section complexe et enroulé autour de la gaine interne d'étanchéité selon un pas court, c'est-à-dire avec un angle d'hélice dont la valeur absolue est proche de 90°. Entre deux spires adjacentes formées par l'enroulement du profilé principal, il existe un déjoint débouchant vers l'espace interne de la conduite flexible. La présence d'un tel déjoint peut entrainer la déformation de la gaine interne d'étanchéité pouvant résulter en une perte d'étanchéité prématurée. En effet, sous l'effet de la pression interne, la gaine interne d'étanchéité peut fluer au sein des déjoints formés par la voûte de pression. Afin de limiter ce phénomène de fluage de la gaine interne d'étanchéité, la voûte de pression comprend un profilé supplémentaire, généralement métallique, qui permet de combler le déjoint. Le profilé supplémentaire possède par exemple une section en forme de T formée par profilage.

La mise en oeuvre d'une voûte de pression comprenant un profilé principal et un profilé supplémentaire reste également problématique à l'image de la mise en oeuvre de la carcasse.

Il existe donc un besoin de fournir une installation permettant la fabrication d'une structure de renfort d'une conduite flexible pour le transport d'un fluide pétrolier et/ou gazier en milieu sous-marin minimisant les risques de défauts géométriques dans la structure de renfort.

### Divulgation de l'invention

Dans ce but, l'invention propose une installation pour la fabrication d'une structure de renfort d'une conduite flexible pour le transport d'un fluide pétrolier et/ou gazier en milieu sous-marin comprenant un plateau sur lequel est agencé :
- un premier train de profilage d'un feuillard principal comprenant au moins une tête de profilage principale configurée pour recevoir ledit feuillard principal, ladite au moins une tête de profilage principale comprenant au moins une paire de galets principaux inférieur et supérieur apte à plier ledit feuillard principal pour former un profilé principal,
- un second train de profilage d'un feuillard supplémentaire comprenant au moins une tête de profilage supplémentaire configurée pour recevoir ledit feuillard supplémentaire, ladite au moins une tête de profilage supplémentaire comprenant au moins une paire de galets supplémentaires inférieur et supérieur apte à plier ledit feuillard supplémentaire pour former un profilé supplémentaire,
- un moyen d'entraînement de ladite au moins une tête de profilage principale, un moyen d'enroulement du profilé principal et du profilé supplémentaire en aval dudit premier train de profilage et dudit second train de profilage.

L'installation selon l'invention est remarquable en ce que la ou les paires de galets supplémentaires inférieur et supérieur de ladite ou de l'ensemble desdites têtes de profilage supplémentaires sont montées libres en rotation par rapport audit plateau.

En effet, la Demanderesse a mis en évidence un paramètre important de la fabrication d'une telle structure de renfort qui est le différentiel de vitesse entre le profilé principal et le profilé supplémentaire et partant entre le feuillard principal et le feuillard supplémentaire. En effet, un mauvais contrôle de ce différentiel de vitesse peut causer une instabilité géométrique de la structure de renfort et en conséquence, limiter la résistance aux efforts radiaux de ladite structure de renfort. Ce différentiel de vitesse est contrôlé dans l'installation selon l'invention en entrainant seulement la ou les têtes de profilage principales. La ou les paires de galets supplémentaires de la ou des têtes de profilage supplémentaires sont montées libres en rotation. Dès lors, le feuillard supplémentaire et partant, le profilé supplémentaire est tiré par le profilé principal, ce qui permet de précisément contrôler et ajuster la vitesse à laquelle arrive le profilé supplémentaire sur le moyen d'enroulement. Ceci se traduit par une tension et une longueur de profilé supplémentaire adaptées pour que l'insertion de ce dernier se fasse au sein des spires formées par le profilé principal de manière optimale. De ce fait, les défauts géométriques de la structure de renfort sont réduits voire supprimés et la résistance mécanique de la structure de renfort est alors améliorée.

Selon une caractéristique particulièrement avantageuse de l'invention, la tête de profilage principale est configurée pour recevoir une épaisseur (e1) du feuillard principal et la tête de profilage supplémentaire est configurée pour recevoir une épaisseur (e2) du feuillard supplémentaire, ladite épaisseur (e1) étant égale ou supérieure à ladite épaisseur (e2). En effet, le feuillard principal selon ce mode de réalisation est plus épais que le feuillard supplémentaire. Aussi, l'épaisseur du profilé principal et généralement supérieure à l'épaisseur du profilé supplémentaire. L'effort permettant d'entraîner le profilé supplémentaire par le biais du profilé principal est ainsi réduit par rapport à l'effort qui aurait été exercé dans le cadre d'un entraînement d'un profilé supplémentaire plus épais que le profilé principal. Ainsi, les risques de flambement du profilé principal en aval du premier train de profilage sont réduits dès lors que l'effort devant être mis en jeu pour tirer le profilé supplémentaire est réduit. Ces risques de flambement sont d'autant plus réduits que l'effort de compression est exercé sur le feuillard principal, qui est le feuillard le plus épais. Par ailleurs, le profilé principal possède généralement une section plus complexe que celle du profilé supplémentaire. Les efforts permettant de plier le feuillard principal selon la section souhaitée sont donc généralement plus importants que ceux mis en jeu pour plier le feuillard supplémentaire. Ainsi, les risques d'endommager le profilé principal en tirant en aval du premier train de profilage sont plus importants qu'en tirant sur le profilé supplémentaire. Afin de conserver l'intégrité du profilé principal il est donc préférable de le pousser et de tirer le profilé supplémentaire.

En outre, selon une caractéristique particulièrement avantageuse de l'invention, la paire de galets supplémentaires inférieur et supérieur est apte à plier le feuillard supplémentaire en une section en forme de S ou de T. Le profilage du feuillard supplémentaire par les galets supplémentaires en une section en forme de S ou de T permet de former un profilé supplémentaire insérable au sein des déjoints formés par l'agrafage du profilé principal.

Selon une caractéristique avantageuse de l'invention permettant de réduire l'encombrement du plateau, le galet principal inférieur et/ou supérieur est respectivement agencé dans l'axe du galet supplémentaire inférieur et/ou supérieur. En effet, selon ce mode de réalisation particulier de l'invention, le premier train de profilage et le second train de profilage partagent les mêmes bâtis et les mêmes arbres sur lesquels sont montées la ou les têtes de profilage principales et supplémentaires. Les modifications à prévoir sur le plateau sont mineures et les installations de fabrication de structure de renfort préexistantes peuvent être ainsi facilement modifiées pour recevoir le second train de profilage.

De manière préférée, le plateau est mobile en rotation autour de son axe ce qui permet de réaliser une structure de renfort de très grande longueur par enroulement hélicoïdal des profilés issus des trains de profilage. En outre, préférentiellement, l'installation comporte aussi un moyen d'entrainement en rotation du plateau, par exemple un moteur électrique. Le moyen d'entraînement en rotation du plateau permet non seulement de produire en continu une structure de renfort de grande longueur, mais aussi de réduire les efforts exercés par les deux trains de profilage en les assistant notamment lors du cintrage des deux profilés en aval des trains de profilage, ce qui facilite l'enroulement de ces deux feuillards par les moyens d'enroulement pour former la structure de renfort.

Par ailleurs, lorsque la structure de renfort est par exemple une carcasse, celle-ci constitue la couche la plus interne de la conduite flexible et ne possède ainsi aucun support mécanique d'appui. Or, d'importants efforts radiaux peuvent s'exercer sur la structure de renfort lors de son enroulement. Ainsi, afin d'éviter l'effondrement de la structure de renfort, le moyen d'enroulement comprend avantageusement un organe d'appui destiné à supporter le profilé principal et le profilé supplémentaire en aval du premier et second train de profilage.

Préférentiellement, l'organe d'appui comprend un mandrin mobile autour de son axe. Ceci permet de faciliter le dégagement de la structure de renfort du mandrin sans coincement ou grippage du profilé supplémentaire sur le mandrin.

Préférentiellement, l'installation comprend un dispositif d'entrainement du mandrin permettant d'entrainer ledit mandrin à une vitesse de rotation au moins quarante fois inférieure à la vitesse de rotation du plateau. Une vitesse de rotation du mandrin trop élevée risque d'endommager aussi bien la structure de renfort que le mandrin par les frottements et l'échauffement résultant du mouvement de glissement de la structure de renfort contre le mandrin. Avec une vitesse de rotation du mandrin au moins quarante fois inférieure à la vitesse de rotation du plateau, en revanche, il est possible de limiter l'échauffement engendré par les frottements entre la structure de renfort et le mandrin. En conséquence, il est possible de réaliser le dégagement de la structure de renfort sans endommager les équipements ou la structure de renfort.

De manière préférée, le moyen d'enroulement comprend une pluralité d'organes de placage disposée autour de l'organe d'appui permettant de plaquer et éventuellement cintrer le profilé principal et le profilé supplémentaire autour de l'organe d'appui facilitant ainsi son assemblage.

De manière préférée, l'installation comprend un dévidoir principal du feuillard principal et un dévidoir secondaire du feuillard supplémentaire, lesdits dévidoirs principal et secondaire étant agencés sur le plateau en amont du premier et second train de profilage. Ceci permet de simplifier l'alimentation en feuillards principal et supplémentaire lors de la fabrication de la structure de renfort par rapport à une installation dans laquelle l'alimentation en feuillards principal et supplémentaire est réalisée en amont de l'installation.

L'invention concerne également un système pour la fabrication d'une conduite flexible comprenant une installation pour la fabrication d'une structure de renfort telle que mentionnée précédemment, un dispositif de fabrication d'une gaine interne d'étanchéité, un dispositif de fabrication d'une nappe d'armures de traction. Le système présente l'ensemble des avantages susmentionnés.

L'invention concerne également un procédé pour la mise en oeuvre d'une installation pour la fabrication d'une structure de renfort d'une conduite flexible pour le transport d'un fluide pétrolier et/ou gazier en milieu sous-marin comprenant les étapes suivantes :
(a) Agencer un premier train de profilage d'un feuillard principal sur un plateau, ledit premier train de profilage comprenant au moins une tête de profilage principale comprenant au moins une paire de galets principaux inférieur et supérieur apte à plier ledit feuillard principal,
(b) Agencer un second train de profilage d'un feuillard supplémentaire sur ledit plateau, ledit second train de profilage comprenant au moins une tête de profilage supplémentaire comprenant au moins une paire de galets supplémentaires inférieur et supérieur apte à plier ledit feuillard supplémentaire, ladite paire de galets supplémentaires inférieur et supérieur étant montée libre en rotation par rapport audit plateau,
(c) Entrainer ladite au moins une tête de profilage principale,
(d) Profiler ledit feuillard principal au sein dudit premier train de profilage pour former un profilé principal et ledit feuillard supplémentaire au sein dudit second train de profilage pour former un profilé supplémentaire,
(e) Enrouler ledit profilé principal et ledit profilé supplémentaire autour d'un moyen d'enroulement pour former ladite structure de renfort.

Les étapes du procédé sont simplifiées dans la mesure où seul le train de profilage est couplé au dispositif d'entrainement et qu'aucun moyen d'entrainement supplémentaire en aval du premier et second train de profilage n'est nécessaire.

### Description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- La Figure 1 est une vue en perspective partiellement écorchée d'un tronçon central d'une conduite flexible ;
- La Figure 2 est une demi vue en coupe suivant un plan axial médian d'un premier exemple de structure de renfort équipant la conduite flexible ;
- La Figure 3 est une demi vue en coupe suivant un plan axial médian d'un second exemple de structure de renfort équipant la conduite flexible ;
- La Figure 4 est une représentation schématique d'un exemple de réalisation d'une installation selon l'invention ;
- La Figure 5 est une représentation schématique d'un autre exemple de réalisation d'une installation selon l'invention ;
- La Figure 6 est une vue en coupe suivant un plan axial d'un exemple de réalisation d'un élément de l'invention équipant l'installation objet de l'invention ;
- La Figure 7 est une vue en coupe suivant un plan axial d'un autre exemple de réalisation d'un élément de l'invention équipant l'installation objet de l'invention ;
- La Figure 8 est un schéma fonctionnel d'un système comprenant l'installation objet de l'invention.

### Modes préférés de réalisation de l'invention

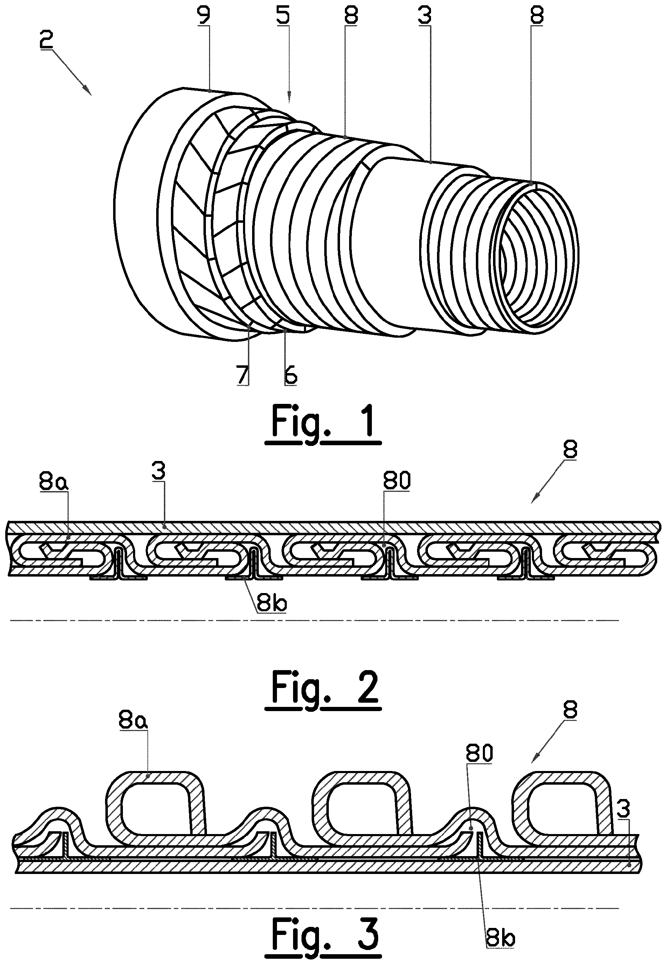

Une conduite flexible (2) pour le transport d'un fluide pétrolier et/ou gazier en milieu sous-marin est par exemple représentée sur la Figure 1. Une telle conduite flexible (2) est notamment décrite dans les documents normatifs API RP 17B, 5ème édition, publié en Mai 2014 et API 17J, 4ème édition, publié en Mai 2014 par l'American Petroleum Institute.

La conduite flexible (2) s'étend par exemple entre une installation de fond et une installation de surface, entre deux installations de fond ou entre deux installations de surface. L'installation de fond est par exemple un collecteur (dit « manifold » en langue anglaise). L'installation de surface peut être une unité flottante de stockage et de déchargement généralement appelée FPSO (« Floating Production Storage and Offloading » en langue anglaise), une structure de type treillis (« jacket » en langue anglaise) ou une bouée de déchargement.

Le milieu sous-marin dans lequel la conduite flexible (2) est destinée à être installée peut-être un lac, une mer ou un océan. La profondeur du fond marin peut être d'environ 100 m, 1000 m, 2000 m, voire supérieure à 3000 m.

La conduite flexible (2) comprend typiquement une gaine interne d'étanchéité (3) formant un passage interne étanche de circulation du fluide pétrolier et/ou gazier. La gaine interne d'étanchéité (3) est généralement formée d'un polymère tel qu'une polyoléfine du type polyéthylène (PE), polyéthylène haute densité (PEHD) ou d'un polyamide tel qu'un polyamide 11 (PA11) ou polyamide 12 (PA12) ou d'un polymère fluoré du type polyfluorure de vinylidène (PVDF). L'épaisseur de la gaine interne d'étanchéité (3) est par exemple comprise entre 5 mm et 20 mm. Elle est généralement réalisée par extrusion.

En outre, la conduite flexible (2) comprend généralement au moins une nappe d'armures de traction (5) destinée à reprendre les efforts de traction liés principalement au poids de la conduite flexible (2). La nappe d'armures de traction (5) comprend généralement deux couches d'armures de traction (6, 7) formées d'une pluralité de fils d'armures enroulés à pas long autour de la conduite flexible (2). Par « enroulé à pas long », il est entendu que la valeur absolue de l'angle d'hélice est inférieure à 60°, et est typiquement comprise entre 25° et 55°. Les fils d'armures peuvent être métalliques ou en composites formés de fibre de carbone afin de réduire le poids total de la conduite flexible (2). La section des fils d'armures est par exemple rectangulaire, circulaire ou de toute autre section adaptée à la présente application.

Pour protéger la nappe d'armures de traction (5) du phénomène de corrosion, la conduite flexible (2) peut comprendre une gaine externe de protection (9) agencée autour la nappe d'armures de traction (5). La gaine externe de protection (9) comprend généralement un matériau polymérique tel qu'une polyoléfine de type polypropylène (PP) ou polyéthylène (PE), un polyamide (PA) ou tout autre matériau adapté à la présente application. L'épaisseur de la gaine externe de protection (9) est par exemple comprise entre 5 mm et 15 mm et elle est généralement réalisée par extrusion.

Entre la nappe d'armures de traction (5) et la gaine externe de protection (9), la conduite flexible (2) peut éventuellement comprendre un ensemble de câbles électriques et/ou optiques (non représenté) permettant le chauffage et le contrôle de la température de la conduite flexible (2) et/ou de tubes pour l'injection de gaz, d'eau ou tout autre type de fluide. Une telle conduite flexible (2) est notamment connue dans le domaine de la présente invention sous l'acronyme IPB (« Integrated Production Bundle » en langue anglaise).

En outre, la conduite flexible (2) comprend au moins une structure de renfort (8) permettant de reprendre les efforts radiaux s'exerçant sur la conduite flexible (2). La conduite flexible (2) représentée sur la Figure 1 comprend par exemple deux structures de renfort (8). La structure de renfort (8) est un élément tubulaire flexible agencé coaxialement autour et/ou à l'intérieur de la gaine interne d'étanchéité (3).

En référence aux Figures 2 et 3, la structure de renfort (8) comprend un profilé principal (8a) enroulé à pas court, c'est-à-dire que la valeur absolue de l'angle d'hélice est proche de 90°, généralement comprise entre 75° et 90°. Chaque spire du profilé principal (8a) est agrafée à une spire adjacente permettant de reprendre les efforts radiaux s'exerçant sur la conduite flexible (2). Le profilé principal (8a) est généralement métallique et présente une épaisseur généralement comprise entre 1 mm et 6 mm et notamment comprise entre 1.5 mm et 4 mm.

Après agrafage, les spires du profilé principal (8a) définissent un déjoint (80) permettant d'assurer la flexibilité de la conduite flexible (2). Ce déjoint est fermé en partie voire totalement par un profilé supplémentaire (8b). Le profilé supplémentaire (8b) est généralement métallique et présente une section en forme de S ou de T insérable au niveau du déjoint (80) du profilé principal (8a).

L'épaisseur du profilé principal (8a) est généralement égale ou supérieure à l'épaisseur du profilé supplémentaire (8b). Par exemple, le profilé supplémentaire (8b) possède une épaisseur comprise entre 0.5 mm et 5 mm et plus particulièrement comprise entre 0.8 mm et 1.5 mm.

La Figure 2 représente un premier exemple de structure de renfort (8). Selon ce premier exemple, la structure de renfort (8) est disposée à l'intérieur de la gaine interne d'étanchéité (3) et constitue ainsi la couche la plus interne de la conduite flexible (2). La structure de renfort (8) est alors destinée à entrer en contact avec le fluide pétrolier et/ou gazier. Une telle structure de renfort (8) est connue dans le domaine de la présente invention sous le terme de carcasse ou carcasse interne. La conduite flexible (2) est soumise à une pression externe très élevée lorsqu'elle est immergée à grande profondeur, par exemple environ 250 bar à 2500 m de profondeur, ce qui peut entrainer des risques d'effondrement (« collapse » en langue anglaise) de la conduite flexible (2). Aussi, la gaine interne d'étanchéité (3) et la gaine externe de protection (9) forme un espace annulaire dans lequel des fines particules de gaz contenues dans le fluide pétrolier et/ou gazier ont tendance à migrer au travers de la gaine interne d'étanchéité (3). Lors d'une éventuelle dépressurisation brutale de la conduite flexible (2) (« shut down » en langue anglaise), les gaz sont piégés au sein de l'espace annulaire provoquant une augmentation de la pression au sein dudit espace annulaire. Cette pression peut dans certains cas devenir supérieure à la pression à l'intérieur de la conduite flexible (2) et conduire à l'effondrement de la gaine interne d'étanchéité (3). Afin de limiter ces risques d'effondrement, la structure de renfort (8) est agencée à l'intérieur de la conduite flexible.

Selon ce premier exemple et en référence à la Figure 2, le profilé principal (8a) présente une section en forme de S. Après agrafage, les spires définissent un déjoint (80) débouchant radialement vers l'intérieur de la conduite flexible (2) conférant un aspect rugueux à la surface interne de conduite flexible (2). Cette dernière est ainsi dite à passage non lisse (« rough bore » en langue anglaise). Lorsque la conduite flexible (2) est en service, le déjoint (80) a tendance à perturber l'écoulement du fluide pétrolier et/ou gazier, notamment en créant des différentiels de pression. On observe alors des phénomènes vibratoires, voire, lorsqu'une résonance est atteinte, des phénomènes de pulsation induite par la circulation du fluide (dit « flow induced pulsation » en langue anglaise). Ces phénomènes ont tendance à accélérer la fatigue des équipements connexes et plus particulièrement des moyens de connexions (soudure, bride...).

Afin de réduire, voire de s'affranchir de ces phénomènes vibratoires, le profilé supplémentaire (8b) est agencé au sein du déjoint (80). La Figure 2 représente par exemple le profilé supplémentaire (8b) présentant une section en forme de T. Plus particulièrement, la section du profilé supplémentaire (8b) définit une branche centrale s'étendant radialement au sein du déjoint (80) et deux extrémités libres s'étendant le long du profilé principal (8a).

En outre, une rainure (non représentée) peut être aménagée sur la surface interne et/ou externe du profilé supplémentaire (8b). La rainure s'étend par exemple du déjoint (80) formé par le profilé principal (8a) jusqu'à l'extrémité libre du profilé supplémentaire (8b). Cette rainure permet de faciliter l'écoulement du fluide pétrolier et/ou gazier entre le déjoint (80) et le passage interne de la conduite flexible (2). On pourra notamment se reporter à la demande de brevet WO2015121424 dans laquelle une telle rainure est par exemple décrite.

La Figure 3 représente un second exemple de réalisation de la structure de renfort (8). Ce second exemple peut être pris en combinaison du premier exemple de réalisation de la structure de renfort (8), la conduite flexible (2) comprend alors deux structures de renfort (8) ou en alternative du premier exemple de réalisation, la conduite flexible (2) comprend alors une structure de renfort (8) selon le second exemple. Une telle conduite flexible (2) est alors dite à passage lisse (« smooth bore » en langue anglaise).

Selon ce second exemple, la structure de renfort (8) est agencée autour de la gaine interne d'étanchéité (3) et plus particulièrement entre la gaine interne d'étanchéité (3) et la nappe d'armures de traction (5). La conduite flexible (2) est soumise à une pression interne liée à la circulation du fluide pétrolier et/ou gazier pouvant atteindre 200 bar voire plus pouvant conduire à l'éclatement de la conduite flexible (2). Afin de limiter voire de s'affranchir de ces risques d'éclatement de la conduite flexible (2), la structure de renfort (8) est agencée autour de la gaine interne d'étanchéité (3).

Selon ce second exemple de réalisation et en référence à la Figure 3, le profilé principal (8a) présente une section transversale de géométrie complexe formée par exemple de trois parties principales. La première partie se présente sous la forme d'un caisson trapézoïdale à partir duquel la deuxième partie du profilé principal (8a) s'étend et forme un arc de cercle dont le sommet est orienté vers l'extérieure de la conduite flexible (2). La troisième partie forme une surface d'appui de section constante sur laquelle est enroulée la première partie d'une spire adjacente et dont l'extrémité s'étend radialement au sein de l'arc de ladite spire adjacente. Ceci permet de former l'agrafage du profilé principal (8a).

L'espace interne de l'arc formé par la deuxième partie du profilé principal (8a) forme le déjoint (80) qui débouche radialement sur la gaine interne d'étanchéité (3). Sous l'effet de la pression interne, la gaine interne d'étanchéité (3) peut fluer au sein du déjoint (80) entrainant des risques d'endommagement de la gaine interne d'étanchéité (3). Le déjoint (80) est donc comblé en partie voire totalement par le profilé supplémentaire (8b).

Plus particulièrement, la section du profilé supplémentaire (8b) définit une branche centrale s'étendant radialement au sein du déjoint (80) et deux extrémités libres s'étendant respectivement le long d'une partie de la troisième partie d'une spire du profilé principal (8a) et d'une partie de la troisième partie d'une spire adjacente du profilé principal (8a). Plus particulièrement, la branche centrale du profilé supplémentaire (8b) cohabite au sein du déjoint (80) avec l'extrémité de la troisième partie du profilé principal (8a).

Dans un mode particulier de réalisation, la structure de renfort (8) peut comprendre un renfort mécanique inséré dans les spires du profilé principal (8a) afin d'améliorer la résistance aux efforts radiaux s'exerçant sur la conduite flexible (2). En effet, un tel renfort mécanique permet de limiter la déformation des spires du profilé principal (8a) sous l'effet de la pression.

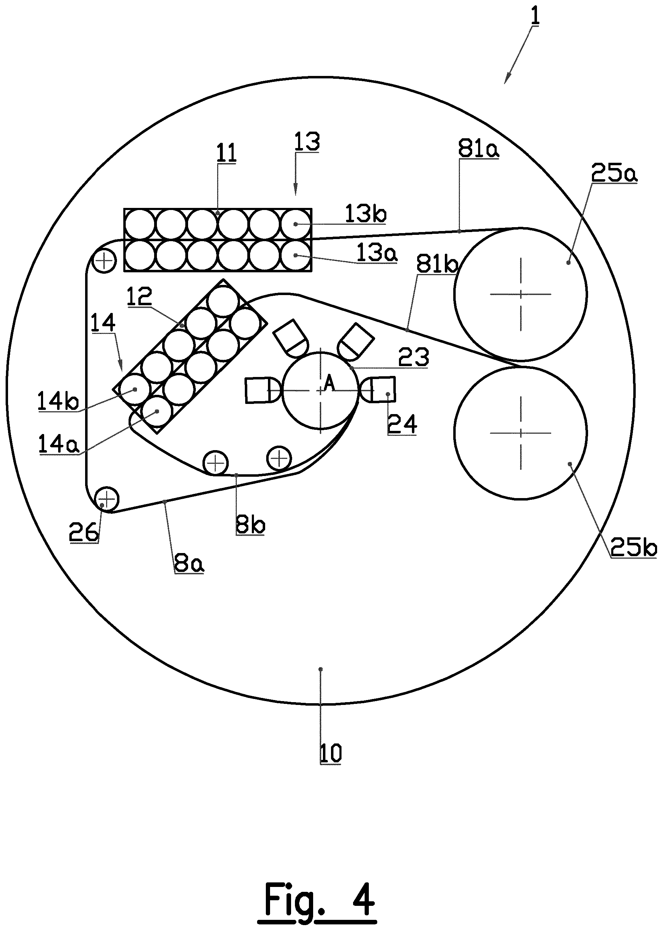

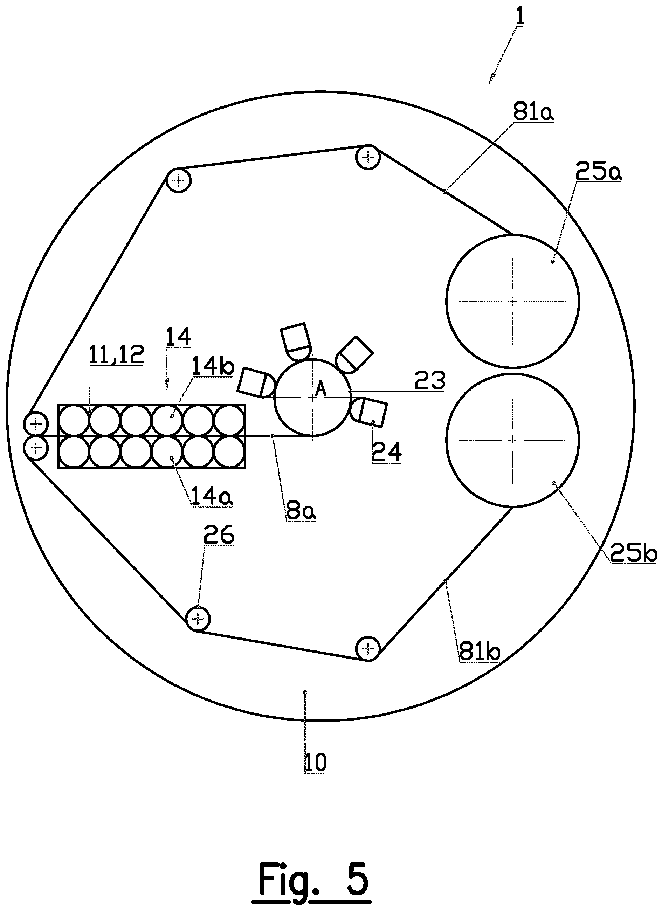

La fabrication d'une telle structure de renfort (8) est réalisée en plusieurs étapes par une installation (1) selon l'invention représentée par exemple sur les Figures 4 et 5. Le profilé principal (8a) et le profilé supplémentaire (8b) sont respectivement profilés à partir d'un feuillard principal (81a) et d'un feuillard supplémentaire (81b) respectivement au sein d'un premier train de profilage (11) et d'un second train de profilage (12) agencés sur un même plateau (10) de l'installation (1). Des moyens d'enroulement permettent ensuite d'enrouler le profilé principal (8a) et le profilé supplémentaire (8b) afin de former une structure tubulaire formant la structure de renfort (8).

Les différents éléments de l'installation (1) peuvent être agencés sur le plateau (10), et notamment le premier train de profilage (11) et le second train de profilage (12). Par rapport à des installations pour lesquels ces éléments sont agencés hors du plateau (10) sur les sites de production, le plateau (10) permet de rassembler les différents éléments de l'installation (1) et ainsi d'en réduire l'encombrement sur lesdits sites de production.

La longueur de la structure de renfort (8) peut être de l'ordre de plusieurs dizaines de mètres à plusieurs centaines de mètres. En outre, la conduite flexible (2) équipée de la structure de renfort (8) est généralement destinée à être enroulée sur des bobines de stockage après sa fabrication. Afin de permettre ce stockage, la conduite flexible (2) équipée de la structure de renfort (8) est généralement bloquée en rotation autour de son axe longitudinal. Ainsi, pour fabriquer de telles longueurs de structure de renfort (8) en continu, le plateau (10) est avantageusement mobile en rotation. La vitesse de rotation du plateau (10) est généralement comprise entre quelques tr/min tels que 5tr/min ou 10tr/min et 60 tr/min. En outre, préférentiellement, l'installation comporte aussi un moyen d'entrainement en rotation du plateau, par exemple un moteur électrique. S'agissant de la géométrie du plateau (10), celle-ci peut être de n'importe quelle forme adaptée à la présente invention, par exemple polygonale ou circulaire. Au regard de l'inertie, un plateau (10) de forme sensiblement circulaire sera tout de même préféré. Ainsi, comme représenté sur les Figures 4 et 5, le plateau (10) est par exemple circulaire de centre A et est par exemple réalisé en acier.

Par ailleurs, l'installation (1) selon l'invention peut comprendre un dévidoir principal (25a) du feuillard principal (81a) et un dévidoir secondaire (25b) du feuillard supplémentaire (81b). Le dévidoir principal (25a) permet de délivrer le feuillard principal (81a) vers le premier train de profilage (11) agencé sur le plateau (10) en aval dudit dévidoir principal (25a). Par mesure de simplification, seul le dévidoir principal (25a) en lien avec le feuillard principal (81a) sera détaillé dans la suite de la description. Celle-ci s'applique cependant au dévidoir secondaire (25b) en lien avec le feuillard supplémentaire (81b).

Le dévidoir principal (25a) peut être agencé en amont du plateau (10), ou directement sur le plateau (10) et plus particulièrement sur la face avant du plateau (10) comme représenté par exemple sur les Figures 4 et 5. Le dévidoir principal (25a) est notamment monté libre en rotation sur un arbre fixé sur le plateau (10). Le dévidement du feuillard principal (81a) est freiné par un élément de frottement pouvant être par exemple un patin agencé sur l'arbre et en contact avec le dévidoir principal (25a) ou agencé sur le dévidoir principal (25a) et en contact avec l'arbre. Le dévidoir principal (25a) peut être par exemple composé d'un corps sensiblement circulaire autour duquel peut être enroulé le feuillard principal (81a).

Entre le dévidoir principal (25a) et le premier train de profilage (11), le feuillard principal (81a) peut définir une ligne courbe. Par ligne courbe, il est entendu qu'au moins trois points consécutifs passant par ladite ligne ne sont pas alignés selon une droite rectiligne. L'installation (1) peut alors comprendre des organes de guidage (26) agencés sur le plateau (10) le long du feuillard principal (81a), entre le dévidoir principal (25a) et le premier train de profilage (11) comme notamment représenté sur la Figure 5. Les organes de guidage (26) peuvent être, par exemple, des galets ou tout autre élément permettant de guider le feuillard principal (81a) vers le premier train de profilage (11). Les organes de guidage (26) peuvent être par exemple au nombre de deux, trois, quatre voire plus en fonction de la distance et de la courbure du feuillard principal (81a). Le feuillard principal (81a) est ainsi guidé vers le premier train de profilage (11) dans lequel il est profilé suivant une section telle que précédemment définie.

Le premier train de profilage (11) comprend au moins une tête de profilage principale (13) configurée pour recevoir le feuillard principal (81a). La tête de profilage principale (13) est formée d'une paire de galets principaux inférieur et supérieur (13a, 13b) apte à plier le feuillard principal (81a). La circonférence des galets principaux inférieur et supérieur (13a, 13b) définit une série de sommets et de creux permettant de former un relief selon lequel est profilé le feuillard principal (81a). Le diamètre moyen des galets principaux (13a, 13b) est par exemple compris entre 40 mm et 200 mm. Ce diamètre moyen peut varier en fonction des têtes de profilage principales (13). Il est entendu par diamètre moyen d'un galet, la moyenne des valeurs prise entre les sommets et creux dudit galet.

Plus particulièrement, la paire de galets principaux inférieur et supérieur (13a, 13b) forme un premier passage (15) dans lequel le feuillard principal (81a) est inséré. Lors du passage du feuillard principal (81a) au sein du premier passage (15), la paire de galets principaux inférieur et supérieur (13a, 13b) plie le feuillard principal (81a) suivant le relief formé par la paire de galets principaux inférieur et supérieur (13a, 13b). Le pliage est généralement réalisé de manière progressive. En effet, comme représenté à titre d'exemple sur les Figures 4 et 5, le premier train de profilage (11) peut comprendre une pluralité de têtes de profilage principales (13) agencées en série. Le nombre de têtes de profilage est généralement choisi selon la complexité du profil selon lequel le feuillard principal (81a) est destiné à être profilé et son épaisseur avant et après le profilage. Par exemple, le premier train de profilage (11) peut comprendre deux, trois, quatre, cinq ou six têtes de profilage principales (13) voire plus, chacune des têtes comprenant une paire de galets principaux inférieur et supérieur (13a, 13b) définissant un relief suivant lesquels le feuillard principal (81a) est successivement plié jusqu'à obtenir la section du profilé principal (8a) définit précédemment. Dans le cadre de la présente invention, le premier train de profilage (11) comprend généralement entre six à dix têtes de profilage principales (13).

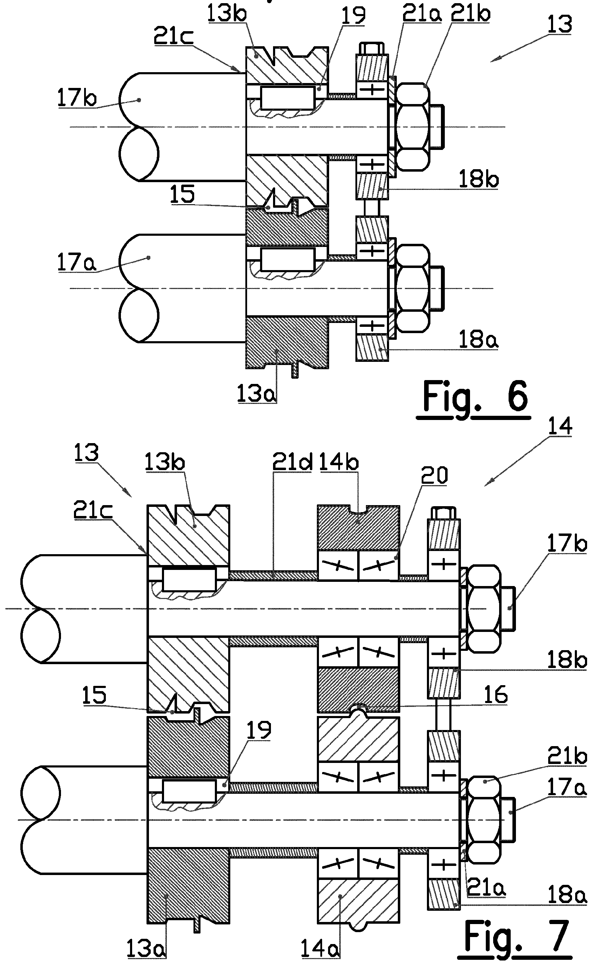

Comme représenté en détail sur la Figure 6, les galets principaux inférieur et supérieur (13a, 13b) sont respectivement montés sur un arbre inférieur (17a) et supérieur (17b). Ces derniers sont préférentiellement montés de manière amovible sur un bâti solidaire du plateau (10). Les arbres inférieur (17a) et supérieur (17b) sont ainsi plus facilement interchangeables ce qui facilite la maintenance de l'installation (1) en cas d'usure par exemple. Lors du passage du feuillard principal (81a) au sein du premier passage (15), des efforts radiaux s'exercent sur les arbres inférieur (17a) et supérieur (17b) qui tendent à les écarter l'un de l'autre. Ainsi, afin de maintenir une distance constante entre les arbres inférieur (17a) et supérieur (17b) lors du passage du feuillard principal (81a), des lunettes inférieure (18a) et supérieure (18b) sont respectivement agencées sur l'extrémité des arbres inférieur (17a) et supérieur (17b) opposées aux extrémités fixées sur le bâti. Les lunettes inférieure (18a) et supérieure (18b) sont par exemple montées sur roulement et reliées entre elles par le biais de boulons dont le niveau de serrage permet d'ajuster la distance entre lesdites lunettes inférieure (18a) et supérieure (18b). En outre, les arbres inférieur (17a) et supérieur (17b) comprennent un moyen de blocage en translation (21) des galets principaux inférieur et supérieur (13a, 13b). Par exemple, un assemblage de rondelle et d'écrou (21a, 21b) est vissé sur une extrémité filetée des arbres inférieur (17a) et supérieur (17b). A l'opposé de l'extrémité filetée, les arbres inférieur (17a) et supérieur (17b) peuvent présenter un épaulement (21c) sur lesquels les galets principaux inférieur et supérieur (13a, 13b) viennent en butée.

En outre, et comme on le verra plus en détail dans la suite de la description, l'arbre inférieur (17a) et/ou l'arbre supérieur (17b) et partant, le galet principal inférieur et/ou supérieur (13a, 13b) d'une ou de plusieurs têtes de profilage principales (13) est entrainé en rotation. Le ou les galets principaux inférieur ou supérieur (13a, 13b) éventuellement non entrainés sont montés libre en rotation. Ainsi, et en référence à la Figure 6, le galet principal inférieur et/ou supérieur (13a, 13b) entrainé en rotation comprend généralement un arrêt en rotation (19) sur l'arbre inférieur (17a) et/ou supérieur (17b). Par exemple, une rainure peut être aménagée sur l'arbre inférieur (17a) et/ou supérieur (17b) et sur le galet principal inférieur et/ou supérieur (13a, 13b) entrainés en rotation. Dans cette rainure, peut être logée une clavette destinée à respectivement bloquer en rotation sur l'arbre inférieur (17a) et/ou supérieur (17b) le galet principal inférieur et/ou supérieur (13a, 13b). Selon l'invention, certains galets principaux inférieurs et/ou supérieurs (13a, 13b) sont éventuellement non entrainés (non représenté). Ces derniers sont généralement montés sur des paliers, pouvant être des coussinets cylindriques de type frittés ou autolubrifiants ou des roulements de type roulements à billes ou à aiguilles ou tout autre type de paliers bien connus de l'homme du métier.

Ainsi, selon l'invention, l'installation (1) comprend un dispositif d'entrainement (non représenté) de la tête de profilage principale (13). Plus particulièrement, le dispositif d'entrainement comprend un moteur destiné à entraîner en rotation au moins un arbre inférieur (17a) et/ou supérieur (17b) par rapport au plateau (10) et partant, au moins un galet principal inférieur et/ou supérieur (13a, 13b).

Une ou plusieurs ou l'ensemble des têtes de profilage principales (13) peuvent être couplées au dispositif d'entrainement. Le dispositif d'entrainement peut comprendre un ou une pluralité de moteurs destiné à entrainer une pluralité d'arbres inférieurs (17a) et/ou supérieurs (17b). Les arbres inférieurs (17a) et/ou supérieurs (17b), et partant, les galets principaux inférieurs et/ou supérieurs (13a, 13b) peuvent être entrainés avec une vitesse de rotation similaire ou variable.

Le moteur est généralement électrique. Le moteur électrique peut être de type asynchrone relié à un variateur de vitesse permettant de réguler la vitesse de rotation. Le moteur peut par ailleurs être un moteur hydraulique, pneumatique ou tout autre actionneur bien connu de l'homme du métier.

Aussi, le dispositif d'entrainement peut comprendre un mécanisme de transmission du mouvement. Ce dernier comprend par exemple un assemblage de courroie ou un train d'engrenage simple ou épicycloïdal dans lesquels le diamètre des roues dentées est choisi en fonction de la vitesse de rotation à transmettre à l'arbre inférieur (17a) et/ou supérieur (17b). Dans un autre exemple de réalisation, le mécanisme de transmission du mouvement peut comprendre un arbre de transmission relié à un joint de cardan. Le mécanisme de transmission n'est nullement limité à ces exemples particuliers et peut être composé d'autres systèmes bien connus de l'homme du métier.

Ainsi, selon l'invention, les galets principaux inférieurs et/ou supérieurs (13a, 13b) entraînés par le dispositif d'entrainement entraînent le feuillard principal (81a) au sein du premier passage (15) et le plient. Le feuillard principal (81a) est alors généralement en traction en amont du premier train de profilage (11) et en aval, le profilé principal (8a) est poussé.

Par ailleurs, s'agissant du second train de profilage (12), ce dernier comprend au moins une tête de profilage supplémentaire (14) configurée pour recevoir le feuillard supplémentaire (81b). La tête de profilage supplémentaire (14) comprend une paire de galets supplémentaires inférieur et supérieur (14a, 14b) apte à plier le feuillard supplémentaire (81b). La paire de galets supplémentaires inférieur et supérieur (14a, 14b) forme un second passage (16) dans lequel le feuillard supplémentaire (81b) est inséré. On se reportera à la description du premier train de profilage (11) en ce qui concerne la composition, l'agencement et les caractéristiques de la tête de profilage supplémentaire (14) et des galets supplémentaires inférieur et supérieur (14a, 14b). Seules les différences sont détaillées ci-dessous.

Le feuillard supplémentaire (81b) possède généralement une épaisseur (e2) inférieure ou égale à l'épaisseur (e1) du feuillard principal (81a). Par exemple, le feuillard principal (81a) présente une épaisseur (e1) comprise entre 1 mm et 6 mm et le feuillard supplémentaire (81b) présente une épaisseur (2) comprise entre 0.5 mm et 5 mm. Aussi, généralement, la section du profilé supplémentaire (8b) est moins complexe que la section du profilé principal (8a). Ainsi, le second train de profilage (12) comprend généralement moins de têtes de profilage supplémentaires (14) que le premier train de profilage (11).

En outre, la paire de galets supplémentaires inférieur et supérieur (14a, 14b) est apte à plier le feuillard supplémentaire (81b) en une section en forme de S ou de T. La ou les paires de galets supplémentaires inférieur et supérieur (14a, 14b) de ladite ou de l'ensemble desdites têtes de profilage supplémentaires (14) sont montées libre en rotation par rapport au plateau (10). Lorsque le second train de profilage (12) comprend plusieurs têtes de profilage supplémentaires (14), alors, selon l'invention, il est entendu que l'ensemble des paires de galets supplémentaires (14a, 14b) de l'ensemble des têtes de profilage supplémentaires (14) sont montées libre en rotation par rapport au plateau (10). A l'image des galets principaux inférieur et supérieur (13a, 13b) non entrainés en rotation, les galets supplémentaires (14a, 14b) sont montés sur des paliers (20) tels que décrits précédemment.

Ainsi, selon l'invention, le feuillard supplémentaire (81b) est entraîné au sein du second passage (16) principalement par frottement entre le profilé principal (8a) et le profilé supplémentaire (8b) en aval du premier train de profilage (11) et du second train de profilage (12). Cette opération est d'autant plus facilitée que l'épaisseur du profilé supplémentaire (8b) est inférieure à l'épaisseur du profilé principal (8a). Ainsi, le profilé supplémentaire (8b) est en traction en aval du premier et second train de profilage (11, 12). Ceci permet également de conserver l'intégrité du profilé principal (8a) notamment dans la mesure où les risques de flambement mais également les risques de déformation plastique pouvant conduire à des fissures du profilé principal (8a) en sortie du premier train de profilage (11) sont réduits.

Comme représenté sur la Figure 4, le premier et second train de profilage (11, 12) sont respectivement agencés sur le plateau (10). Pour faciliter l'assemblage du profilé principal (8a) avec le profilé supplémentaire (8b), le second train de profilage (12) est avantageusement situé plus proche du centre (A) du plateau (10) que le premier train de profilage (11). De manière encore plus avantageuse, le second train de profilage (12) est agencé plus proche du centre (A) du plateau (10) que le premier train de profilage (11) avec un décalage angulaire, ce dernier étant avantageusement compris entre 20° et 45°. Etant entendu que le décalage angulaire représente l'angle formé par l'intersection des droites passant respectivement par le premier passage (15) et le second passage (16).

Selon un autre exemple (non représenté), le premier et le second train de profilage (11, 12) sont agencés en parallèle. L'axe des arbres inférieur (17a) et supérieur (17b) sur lesquels sont respectivement montés les galets principaux inférieur et supérieur (13a, 13b) et les galets supplémentaires inférieur et supérieur (14a, 14b) sont parallèles et montés amovibles sur un bâti commun solidaire du plateau (10).

Selon encore un autre exemple de réalisation représenté sur les Figures 5 et 7 dans lequel le premier et second train de profilage (11, 12) sont également agencés en parallèle, au moins l'un des galets supplémentaires inférieur ou supérieur (14a, 14b) est respectivement agencé dans l'axe d'au moins un des galets principaux inférieur ou supérieur (13a, 13b). Ainsi, les galets principaux inférieur ou supérieur (13a, 13b) sont respectivement agencés sur le même arbre inférieur (17a) ou supérieur (17b) que les galets supplémentaires inférieur ou supérieur (14a, 14b). Comme décrit précédemment, les arbres inférieur (17a) et supérieur (17b) présentent un moyen de blocage en translation (21) des galets principaux inférieur et supérieur (13a, 13b) et supplémentaires inférieur et supérieur (14a, 14b). Par exemple, un assemblage de rondelle et d'écrou (21a, 21b) est agencé sur une extrémité filetée des arbres inférieur (17a) et supérieur (17b). A l'opposé de l'extrémité filetée, les arbres inférieur (17a) et supérieur (17b) comprennent un épaulement (21c) sur lesquels les galets principaux inférieur et supérieur (13a, 13b) ou les galets supplémentaires inférieur et supérieur (14a, 14b) peuvent venir en butée. Aussi, une entretoise (21d) peut être agencée respectivement entre le galet principal inférieur (13a) et le galet supplémentaire inférieur (14a). Une entretoise (21d) est également agencée entre le galet principal supérieur (13b) et le galet supplémentaire supérieur (14b). Aussi, les lunettes inférieure (18a) et supérieure (18b) sont respectivement agencées sur l'extrémité filetée des arbres inférieur (17a) et supérieur (17b) opposées aux extrémités fixées sur le bâti. Cet exemple particulier de réalisation permet de simplifier le montage du second train de profilage (12) en ce que les galets supplémentaires inférieur et supérieur (14a, 14b) peuvent être directement agencés sur les arbres inférieur (17a) et supérieur (17b) du premier train de profilage (11).

Par ailleurs, en aval du premier et second train de profilage (11, 12), le profilé principal (8a) et le profilé supplémentaire (8b) sont cintrés et enroulés au voisinage du centre A du plateau (10) selon une structure tubulaire flexible formant la structure de renfort (8). Ainsi, l'installation (1) comprend un moyen d'enroulement du profilé principal (8a) et du profilé supplémentaire (8b).

Le moyen d'enroulement comprend avantageusement un organe d'appui (23) destiné à supporter le profilé principal (8a) et le profilé supplémentaire (8b). En effet, l'enroulement et le cintrage du profilé principal (8a) et du profilé supplémentaire (8b) pour former une structure tubulaire entraine des efforts radiaux importants qui peuvent écraser la structure de renfort (8) en cours de formation. L'organe d'appui (23) forme ainsi une structure mécanique d'appui sur laquelle d'importants efforts radiaux peuvent s'exercer sans endommager la structure de renfort (8) en formation lors du cintrage et de l'enroulement du profilé principal (8a) et du profilé supplémentaire (8b). L'organe d'appui (23) est formé d'une structure cylindrique s'étendant coaxialement en saillie du plateau (10).

Selon un premier exemple, l'organe d'appui (23) comprend par exemple un mandrin. Cet exemple est particulièrement avantageux lorsque la structure de renfort (8) constitue la couche la plus interne de la conduite flexible (2), telle que la carcasse. Le mandrin est généralement réalisé en acier. Le mandrin possède une section sensiblement cylindrique d'extrémité conique et présente un diamètre pris suivant la plus grande base par exemple compris entre 25 mm et 635 mm. Préférentiellement, un dispositif d'entrainement permet d'entrainer en rotation le mandrin autour de l'axe (A-A'). La vitesse de rotation du mandrin est préférentiellement au moins quarante fois inférieure à la vitesse de rotation du plateau (10). La rotation du mandrin est généralement inverse par rapport au plateau (10) ce qui tend à augmenter localement le diamètre de la structure de renfort (8) et à autoriser son dégagement du mandrin sans coincement. Aussi, les vitesses de rotation du mandrin, du plateau (10) et des galets principaux inférieur et supérieur (13a, 13b) peuvent être telles que le profilé principal (8a) est en traction en aval du premier et du second train de profilage (11, 12). Ainsi, l'invention s'applique également à un exemple particulier de réalisation de l'invention dans lequel le profilé principal (8a) profilé est soumis à une contrainte de traction en aval du premier train de profilage (11).

Un organe de lubrification du mandrin destiné à délivrer un fluide de lubrification sur la surface externe du mandrin en contact avec la structure de renfort (8) peut également être prévu afin de réduire le coefficient de frottement entre la surface externe du mandrin et le profilé supplémentaire (8b). L'organe de lubrification est par exemple composé d'une pluralité d'orifices d'injection aménagés dans le mandrin et répartis sur la longueur du mandrin permettant d'autoriser le passage du fluide de lubrification sur la surface externe du mandrin. Le fluide de lubrification est par exemple un fluide hydrocarboné. Le coefficient de frottement entre la surface externe du mandrin et la structure de renfort est par exemple inférieur à 0,1 après la lubrification de la surface externe du mandrin. En complément ou en alternative de l'organe de lubrification, le mandrin peut également comprendre un revêtement de surface permettant également de réduire le coefficient de frottement entre la surface externe du mandrin et le profilé supplémentaire (8b). Par exemple, le revêtement de surface est formé d'une couche de chrome.

Selon un second exemple particulièrement avantageux, notamment lorsque la structure de renfort (8) est agencée autour de la gaine interne d'étanchéité (3) telle qu'une voûte de pression, l'organe d'appui (23) est formé par la gaine interne d'étanchéité (3) et la carcasse de la conduite flexible (2). En effet, la carcasse de la conduite flexible (2) possède une résistance aux efforts radiaux qui permet de s'affranchir d'une structure d'appui supplémentaire pour la fabrication de la voûte de pression. Selon cet exemple, l'organe d'appui (23) comprend également une pluralité de galets agencés autour du centre du plateau (10) formant une pluralité de points d'appui sur lesquels le profilé principal (8a) et le profilé supplémentaire (8b) sont cintrés pour former la structure de renfort (8). Généralement, au moins deux galets diamétralement opposés sont agencés autour du centre du plateau (10).

Par ailleurs, autour de l'organe d'appui (23), le moyen d'enroulement comprend avantageusement une pluralité d'organes de placage (24) permettant de faciliter l'assemblage du profilé principal (8a) avec le profilé supplémentaire (8b) en les maintenant et cintrant sur l'organe d'appui (23). Dans un exemple particulier de réalisation de l'invention, le moyen d'enroulement comprend quatre organes de placage (23) repartis autour de l'organe d'appui (23). Les quatre organes de placage (23) peuvent par exemple être régulièrement répartis autour de l'organe d'appui (23) avec un intervalle angulaire compris entre 50° et 70° et plus particulièrement, avec un intervalle angulaire compris entre 60° et 70°. Les organes de placage (24) sont par exemple des galets aptes à plaquer et éventuellement cintrer le profilé principal (8a) et le profilé supplémentaire (8b) assemblés. Avantageusement, les organes de placage (24) sont montés libre en rotation.

Des organes de guidage (26) de type de ceux décrits précédemment peuvent également être agencés entre le premier train de profilage (11) et l'organe d'appui (23) et/ou le second train de profilage (12) et l'organe d'appui (23) afin d'amener le profilé principal (8a) et/ou le profilé supplémentaire (8b) tangentiellement sur le mandrin.

L'installation (1) peut également comprendre un ou plusieurs trains de profilage additionnels (non représenté) permettant de profiler un ou plusieurs feuillards additionnels.

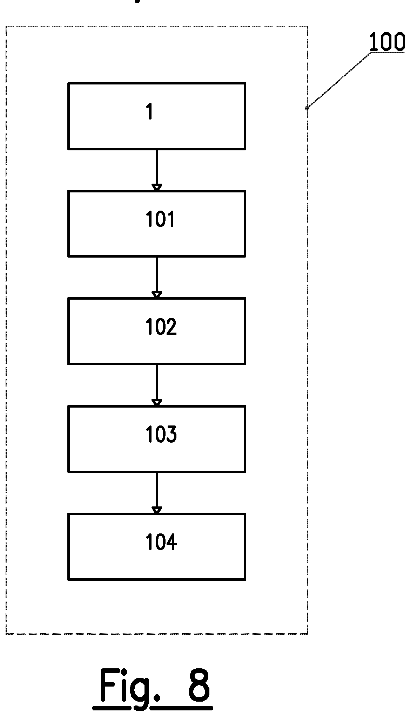

Par ailleurs, l'installation (1) peut être intégrée à un système (100) de fabrication de la conduite flexible (2). En référence à la Figure 8, le système (100) comprend outre l'installation (1) précédemment décrite, un dispositif (101) de fabrication de la gaine interne d'étanchéité (3) agencé en amont ou en aval de ladite installation (1).

Le dispositif (101) de fabrication de la gaine interne d'étanchéité (3) est par exemple une ligne d'extrusion agencée en aval de l'installation (1) lorsque la structure de renfort (8) est agencée à l'intérieur de la gaine interne d'étanchéité (3) telle qu'une carcasse ou en amont de l'installation (1) lorsque la structure de renfort (8) est agencée autour de la gaine interne d'étanchéité (3) telle qu'une voûte de pression. La ligne d'extrusion comprend une extrudeuse permettant de former la gaine interne d'étanchéité (3), un organe de refroidissement permettant la polymérisation de la gaine interne d'étanchéité (3) et un organe de traction permettant la translation de la conduite flexible (2) vers un éventuel dispositif suivant. On pourra, à titre d'exemple, se reporter à la demande de brevet WO2009141538 dans laquelle une extrudeuse adaptée à la présente invention est décrite.

En outre, en aval de l'installation (1) et de la ligne d'extrusion, le système (100) peut comprendre un dispositif (102) de fabrication de la nappe d'armure de traction (5).

Le dispositif (102) de fabrication de la nappe d'armure de traction (5) comprend plusieurs bobines de fils d'armure de traction alimentant par exemple deux têtes de traction, chacune formant les couches d'armures de traction (6, 7). On pourra notamment se reporter à la demande de brevet WO2010012897 dans laquelle un tel dispositif (102) est par exemple décrit.

Avantageusement, le système (100) peut également comprendre un dispositif (103) de fabrication de la gaine externe de protection (9) agencé en aval du dispositif (102) de fabrication de la nappe d'armure de traction (5). Le dispositif (103) de fabrication de la gaine externe de protection (9) est par exemple une extrudeuse, semblable au dispositif (101) de fabrication de la gaine interne d'étanchéité (3).

Le système (100) peut également comprendre un dispositif (104) de stockage de la conduite flexible (2). Par exemple, le dispositif (104) de stockage de la conduite flexible (2) est formé d'une bobine sur laquelle la conduite flexible (2) peut être enroulée.

Le système (100) peut comprendre outre les dispositifs susmentionnés, des dispositifs supplémentaires de fabrication et/ou de pose de couches intermédiaires tels que des bandes anti usures, d'isolation thermique ou de renforts mécaniques, ou tout autre type de couches pouvant composer la conduite flexible (2). Aussi, le système (100) peut comprendre un dispositif supplémentaire de pose de câbles électriques et/ou optiques et/ou de tubes suivant une configuration en S-Z de type de celui décrit dans la demande de brevet WO2014/091100 ou suivant une configuration en hélice.

Un procédé pour la mise en oeuvre de l'installation (1) pour la fabrication de la structure de renfort (8) de la conduite flexible (2) va maintenant être décrit.

Dans une étape éventuelle de préparation du premier et du second train de profilage (11, 12), on sélectionne les galets principaux (13a, 13b) et les galets supplémentaires (14a, 14b) permettant de plier le feuillard principal (81a) et le feuillard supplémentaire (81b) suivant les sections telles que définies précédemment. Lesdits galets principaux (13a, 13b) et supplémentaires (14a, 14b) sont ensuite montés sur les arbres respectifs inférieur (17a) et supérieur (17b). Lorsque les galets principaux (13a, 13b) et supplémentaires (14a, 14b) partagent les mêmes arbres (17a, 17b), avantageusement, les galets supplémentaires (14a, 14b) sont montés sur les arbres (17a, 17b) après montage des galets principaux (13a, 13b). Les galets supplémentaires (14a, 14b) sont avantageusement plus éloignés du plateau (10) que les galets principaux (13a, 13b) ce qui facilite le profilage du feuillard principal (81a) et du feuillard supplémentaire (81b).

Dans une étape (a), le premier train de profilage (11) du feuillard principal (81a) est agencé sur le plateau (10). Le premier train de profilage (11) comprend la tête de profilage principal (13) composée des galets principaux (13a, 13b) permettant de plier le feuillard principal (81a). Par ailleurs, le dispositif d'entrainement est avantageusement couplé à la tête de profilage principal (13) afin d'entraîner les arbres inférieur (17a) et/ou supérieur (17b) et partant, les galets principaux inférieur et/ou supérieur (13a, 13b) en rotation durant une étape suivante (c).

Dans une seconde étape (b), le second train de profilage (12) du feuillard supplémentaire (81b) comprenant la tête de profilage supplémentaire (14) est agencée sur le plateau (10). Les galets supplémentaires (14a, 14b) permettant de plier le feuillard supplémentaire (81b) et formant la tête de profilage supplémentaire (14) étant montés libre en rotation par rapport au plateau (10).

Dans le mode de réalisation selon lequel au moins l'un des galets supplémentaires inférieur ou supérieur (14a, 14b) est respectivement agencé dans l'axe d'au moins un des galets principaux inférieur ou supérieur (13a, 13b), alors il est entendu que les étapes (a) et (b) peuvent être réalisées simultanément. En effet, dès lors que les galets supplémentaires inférieur et supérieur (14a, 14b) partagent respectivement le même arbre inférieur et supérieur (17a, 17b) que les galets principaux inférieur et supérieur (13a, 13b), alors ces derniers peuvent être préinstallés sur lesdits arbres, la mise en place du premier train de profilage (11) impliquant ainsi la mise en place du second train de profilage (12).

De manière avantageuse, une étape (b') d'alimentation en feuillard principal (81a) et supplémentaire (81b) est réalisée. Durant cette étape, au moins une bobine de feuillard principal (81a) et au moins une bobine de feuillard supplémentaire (81b) sont respectivement chargées sur le dévidoir principal (25a) et le dévidoir secondaire (25b). Le feuillard principal (81a) et le feuillard supplémentaire (81b) sont ensuite respectivement insérés au sein du premier passage (15) formé par les galets principaux (13a, 13b) et du second passage (16) formé par les galets supplémentaires (14a, 14b).

Puis dans une troisième étape (c), la tête de profilage principal (13) est entraînée. En effet, lors de l'étape (c) le dispositif d'entrainement est mis en service par le biais d'un pupitre de commande par exemple, entrainant en rotation l'arbre inférieur (17a) et/ou supérieur (17b) et partant, les galets principaux inférieur et/ou supérieur (13a, 13b). L'entrainement en rotation desdits galets principaux inférieur et/ou supérieur (13a, 13b) entraine le feuillard principal (81a) à travers le premier passage (15). S'agissant du feuillard supplémentaire (81b), l'entrainement du feuillard principal (81a) et l'éventuelle rotation du plateau (10) permet, par friction des profilés principal (8a) et supplémentaire (8b) en aval du premier train de profilage (11) et du second train de profilage (12), de tirer le feuillard supplémentaire (81b) à travers le second passage (16). Une étape (d) de profilage est alors réalisée lors du passage respectif des feuillards principal (81a) et supplémentaire (81b) à travers le premier passage (15) et le second passage (16), où ils sont respectivement profilés par les galets principaux inférieur et supérieur (13a, 13b) et les galets supplémentaires inférieur et supérieur (14a, 14b).

Ensuite, lors d'une étape (e), en aval du premier train de profilage (11) et du second train de profilage (12), le profilé principal (8a) et le profilé supplémentaire (8b) sont enroulés autour d'un moyen d'enroulement suivant une structure tubulaire. Plus particulièrement, le profilé principal (8a) et le profilé supplémentaire (8b) sont enroulés autour de l'organe d'appui (23) selon un pas court, compris entre 75° et 90°. La réalisation de cette étape (e) de pliage est avantageusement facilitée par les organes de placage (24) agencés autour de l'organe d'appui (23).

## Revendications

1. Installation (1) pour la fabrication d'une structure de renfort (8) d'une conduite flexible (2) pour le transport d'un fluide pétrolier et/ou gazier en milieu sous-marin comprenant un plateau (10) sur lequel est agencé :
- Un premier train de profilage (11) d'un feuillard principal (81a) comprenant au moins une tête de profilage principale (13) configurée pour recevoir ledit feuillard principal (81a), ladite au moins une tête de profilage principale (13) comprenant au moins une paire de galets principaux inférieur et supérieur (13a, 13b) apte à plier ledit feuillard principal (81a) pour former un profilé principal (8a),
- Un second train de profilage (12) d'un feuillard supplémentaire (81b) comprenant au moins une tête de profilage supplémentaire (14) configurée pour recevoir ledit feuillard supplémentaire (81b), ladite au moins une tête de profilage supplémentaire (14) comprenant au moins une paire de galets supplémentaires inférieur et supérieur (14a, 14b) apte à plier ledit feuillard supplémentaire (81b) pour former un profilé supplémentaire (8b),
- Un moyen d'entraînement de ladite au moins une tête de profilage principale (13),
- Un moyen d'enroulement du profilé principal (8a) et du profilé supplémentaire (8b) en aval dudit premier train de profilage (11) et dudit second train de profilage (12) pour former ladite structure de renfort (8),
**caractérisée en ce que** la ou les paires de galets supplémentaires inférieur et supérieur (14a, 14b) de ladite ou de l'ensemble desdites têtes de profilage supplémentaire (14) sont montées libres en rotation par rapport audit plateau (10).

2. Installation selon la revendication 1 **caractérisée en ce que** la tête de profilage principale (13) est configurée pour recevoir une épaisseur (e1) du feuillard principal (81a) **et en ce que** la tête de profilage supplémentaire (14) est configurée pour recevoir une épaisseur (e2) du feuillard supplémentaire (81b), ladite épaisseur (e1) étant égale ou supérieure à ladite épaisseur (e2).

3. Installation selon l'une des revendications 1 ou 2 **caractérisée en ce que** la paire de galets supplémentaires inférieur et supérieur (14a, 14b) est apte à plier le feuillard supplémentaire (81b) en une section en forme de S ou de T.

4. Installation selon l'une quelconque des revendications précédentes **caractérisée en ce que** le galet principal inférieur et/ou supérieur (13a, 13b) est respectivement agencé dans l'axe du galet supplémentaire inférieur et/ou supérieur (14a, 14b).

5. Installation selon l'une quelconque des revendications précédentes **caractérisée en ce que** le plateau (10) est mobile en rotation autour de l'axe (A-A').

6. Installation selon l'une quelconque des revendications précédentes **caractérisée en ce que** le moyen d'enroulement comprend un organe d'appui (23) destiné à supporter le profilé principal (8a) et le profilé supplémentaire (8b).

7. Installation selon la revendication 6 **caractérisée en ce que** l'organe d'appui (23) comprend un mandrin mobile autour de l'axe (A-A').

8. Installation selon la revendication 7 **caractérisée en ce que** l'installation comprend un dispositif d'entrainement du mandrin permettant d'entrainer ledit mandrin à une vitesse de rotation au moins quarante fois inférieure à la vitesse de rotation du plateau (10).

9. Installation selon l'une quelconque des revendications 6 à 8 **caractérisée en ce que** le moyen d'enroulement comprend une pluralité d'organes de placage (24) disposée autour de l'organe d'appui (23).

10. Installation selon l'une quelconque des revendications précédentes **caractérisée en ce qu'**elle comprend un dévidoir principal (25a) du feuillard principal (81a) et un dévidoir secondaire (25b) du feuillard supplémentaire (81b), lesdits dévidoirs principal et secondaire (25a, 25b) étant agencés sur le plateau (10) en amont du premier et second train de profilage (11, 12).

11. Système (100) pour la fabrication d'une conduite flexible (2) comprenant :
- Une installation (1) pour la fabrication d'une structure de renfort (8) selon l'une quelconque des revendications 1 à 10,
- Un dispositif (101) de fabrication d'une gaine interne d'étanchéité (3),
- Un dispositif (102) de fabrication d'une nappe d'armure de traction (5).

12. Procédé pour la mise en oeuvre d'une installation (1) pour la fabrication d'une structure de renfort (8) d'une conduite flexible (2) pour le transport d'un fluide pétrolier et/ou gazier en milieu sous-marin comprenant les étapes suivantes :
- (a) Agencer un premier train de profilage (11) d'un feuillard principal (81a) sur un plateau (10), ledit premier train de profilage (11) comprenant au moins une tête de profilage principale (13) comprenant au moins une paire de galets principaux inférieur et supérieur (13a, 13b) apte à plier ledit feuillard principal (81a),
- (b) Agencer un second train de profilage (12) d'un feuillard supplémentaire (81b) sur ledit plateau (10), ledit second train de profilage (12) comprenant au moins une tête de profilage supplémentaire (14) comprenant au moins une paire de galets supplémentaires inférieur et supérieur (14a, 14b) apte à plier ledit feuillard supplémentaire (81b), ladite paire de galets supplémentaires inférieur et supérieur (14a, 14b) étant montée libre en rotation par rapport audit plateau (10),
- (c) Entrainer ladite au moins une tête de profilage principale (13),
- (d) Profiler ledit feuillard principal (81a) au sein dudit premier train de profilage (11) pour former un profilé principal (8a) et ledit feuillard supplémentaire (81b) au sein dudit second train de profilage (12) pour former un profilé supplémentaire (8b),
- (e) Enrouler ledit profilé principal (8a) et ledit profilé supplémentaire (8b) autour d'un moyen d'enroulement pour former ladite structure de renfort (8).

## Patentansprüche

1. Einrichtung (1) für die Herstellung einer Verstärkungsstruktur (8) einer flexiblen Leitung (2) für den Transport eines Erdöl- und/oder Gas-Fluids unter Wasser, aufweisend eine Platte (10), an welcher angeordnet ist:
- eine erste Profilierungsbahn (11) eines Hauptbands (81a), welche mindestens einen Haupt-Profilierungskopf (13), welcher dazu eingerichtet ist, das Hauptband (81a) aufzunehmen, aufweist, wobei der mindestens eine Haupt-Profilierungskopf (13) mindestens ein Paar aus einer unteren und einer oberen Haupt-Rolle (13a, 13b) aufweist, welche dazu eingerichtet sind, das Hauptband (81a) zu biegen, um ein Hauptprofil (8a) zu bilden,
- eine zweite Profilierungsbahn (12) eines Zusatzbands (81b), welche mindestens einen Zusatz-Profilierungskopf (14), welcher dazu eingerichtet ist, das Zusatzband (81b) aufzunehmen, aufweist, wobei der mindestens eine Zusatz-Profilierungskopf (14) mindestens ein Paar aus einer unteren und einer oberen Zusatz-Rolle (14a, 14b) aufweist, welche dazu eingerichtet sind, das Zusatzband (81b) zu biegen, um ein Zusatzprofil (8b) zu bilden,
- ein Mittel zum Antreiben des mindestens einen Haupt-Profilierungskopfs (13),
- ein Mittel zum Wickeln des Hauptprofils (8a) und des Zusatzprofils (8b), welches der ersten Profilierungsbahn (11) und der zweiten Profilierungsbahn (12) nachgelagert ist, um die Verstärkungsstruktur (8) zu bilden,
**gekennzeichnet dadurch, dass** das Paar oder die Paare aus einer unteren und einer oberen Zusatz-Rolle (14a, 14b) des Zusatz-Profilierungskopfs oder aller Zusatz-Profilierungsköpfe (14) bezüglich der Platte (10) frei drehbar montiert sind.

2. Einrichtung (1) nach dem Anspruch 1, **gekennzeichnet dadurch, dass** der Haupt-Profilierungskopf (13) dazu eingerichtet ist, eine Dicke (e1) des Hauptbands (81a) aufzunehmen, und **dadurch, dass** der Zusatz-Profilierungskopf (14) dazu eingerichtet ist, eine Dicke (e2) des Zusatzbands (81b) aufzunehmen, wobei die Dicke (e1) gleich oder größer der Dicke (e2) ist.

3. Einrichtung (1) nach dem Anspruch 1 oder 2, **gekennzeichnet dadurch, dass** das Paar aus einer unteren und einer oberen Zusatz-Rolle (14a, 14b) dazu eingerichtet ist, das Zusatzband (81b) in einen S-förmigen oder T-förmigen Querschnitt zu biegen.

4. Einrichtung (1) nach einem der vorhergehenden Ansprüche, **gekennzeichnet dadurch, dass** die untere und/oder oberen Haupt-Rolle (13a, 13b) jeweilig zugehörig in der Achse der unteren und/oder einer oberen Zusatz-Rolle (14a, 14b) angeordnet ist.

5. Einrichtung (1) nach einem der vorhergehenden Ansprüche, **gekennzeichnet dadurch, dass** die Platte (10) um die Achse (A-A') drehbeweglich ist.

6. Einrichtung (1) nach einem der vorhergehenden Ansprüche, **gekennzeichnet dadurch, dass** das Mittel zum Wickeln eine Abstützeinrichtung (23) aufweist, welche dazu eingerichtet ist, das Hauptprofil (8a) und das Zusatzprofil (8b) abzustützen.

7. Einrichtung (1) nach dem Anspruch 6, **gekennzeichnet dadurch, dass** die Abstützeinrichtung (23) eine um die Achse (A-A') drehbewegliche Spindel aufweist.

8. Einrichtung (1) nach dem Anspruch 7, **gekennzeichnet dadurch, dass** die Einrichtung aufweist eine Antriebsvorrichtung der Spindel, welche es erlaubt, die Spindel mit einer Drehzahl anzutreiben, welche mindestens vierzig-mal kleiner ist als die Drehzahl der Platte (10).

9. Einrichtung (1) nach einem der Ansprüche 6 bis 8, **gekennzeichnet dadurch, dass** das Mittel zum Wickeln eine Mehrzahl von Plattierungseinrichtungen (24) aufweist, welche um die Abstützeinrichtung (23) herum angeordnet sind.

10. Einrichtung (1) nach einem der vorhergehenden Ansprüche, **gekennzeichnet dadurch, dass** sie aufweist eine Haupt-Spule (25a) des Hauptbands (81a) und eine Sekundär-Spule (25b) des Zusatzbands (81b), wobei die Haupt- und Sekundär-Spulen (25a, 25b) auf der Platte (10) der ersten und er zweiten Profilierungsbahn (11, 12) vorgelagert angeordnet sind.

11. System (100) für die Herstellung einer flexiblen Leitung (2), aufweisend:
- eine Einrichtung für die Herstellung einer Verstärkungsstruktur (8) gemäß einem der Ansprüche 1 bis 10,
- eine Vorrichtung (101) zur Herstellung einer inneren Abdichtungshülle (3),
eine Vorrichtung (102) zur Herstellung einer Zugbewehrungslage (5).

12. Verfahren für die Anwendung einer Einrichtung (1) für die Herstellung einer Verstärkungsstruktur (8) einer flexiblen Leitung (2) für den Transport eines Erdöl- und/oder Gas-Fluids unter Wasser, aufweisend eine Platte (10), an welcher angeordnet ist, aufweisend die folgenden Schritte:
- (a) Anordnen einer ersten Profilierungsbahn (11) eines Hauptbands (81a) an einer Platte (10), wobei die erste Profilierungsbahn (11) mindestens einen Haupt-Profilierungskopf (13) aufweist, welcher mindestens ein Paar aus einer unteren und einer oberen Haupt-Rolle (13a, 13b) aufweist, welche dazu eingerichtet sind, das Hauptband (81a) zu biegen,
- (b) Anordnen einer zweiten Profilierungsbahn (12) eines Zusatzbands (81b) an der Platte (10), wobei die zweite Profilierungsbahn (12) mindestens einen Zusatz-Profilierungskopf (14) aufweist, welcher mindestens ein Paar aus einer unteren und einer oberen Zusatz-Rolle (14a, 14b) aufweist, welche dazu eingerichtet sind, das Zusatzband (81b) zu biegen, wobei das Paar aus einer unteren und einer oberen Zusatz-Rolle (14a, 14b) frei drehbar bezüglich der Platte montiert ist,
- (c) Antreiben des mindestens einen Haupt-Profilierungskopfs (13)
- (d) Profilieren des Hauptbands (81a) innerhalb der ersten Profilierungsbahn (11), um ein Hauptprofil (8a) zu bilden, und des Zusatzbands (81b) innerhalb der zweiten Profilierungsbahn (12), um ein Zusatzprofil (8b) zu bilden,
- (e) Wickeln des Hauptprofils (8a) und des Zusatzprofils (8b) um ein Mittel zum Wickeln, um die Verstärkungsstruktur (8) zu bilden.

## Claims

1. Installation (1) for manufacturing a reinforcing structure (8) of a flexible pipe (2) for transporting a petroleum and/or gas fluid in an underwater environment, which installation comprises a plate (10) on which there is arranged:
- a first profiling section (11) for profiling a main strip (81a), comprising at least one main profiling head (13) configured to receive said main strip (81a), said at least one main profiling head (13) comprising at least one pair of main lower and upper rollers (13a, 13b) capable of bending said main strip (81a) to form a main profile (8a),
- a second profiling section (12) for profiling a supplementary strip (81b), comprising at least one supplementary profiling head (14) configured to receive said supplementary strip (81b), said at least one supplementary profiling head (14) comprising at least one pair of supplementary lower and upper rollers (14a, 14b) capable of bending said supplementary strip (81b) to form a supplementary profile (8b),
- a drive means for driving said at least one main profiling head (13),
- a winding means for winding the main profile (8a) and the supplementary profile (8b) downstream of said first profiling section (11) and of said second profiling section (12) to form said reinforcing structure (8),
**characterised in that** the pair(s) of supplementary lower and upper rollers (14a, 14b) of said or of all said supplementary profiling head(s) (14) are mounted so as to rotate freely relative to said plate (10).

2. Installation according to claim 1, **characterised in that** the main profiling head (13) is configured to receive a thickness (e1) of the main strip (81a), **and in that** the supplementary profiling head (14) is configured to receive a thickness (e2) of the supplementary strip (81b), said thickness (e1) being equal to or greater than said thickness (e2).

3. Installation according to either claim 1 or claim 2, **characterised in that** the pair of supplementary lower and upper rollers (14a, 14b) is capable of bending the supplementary strip (81b) into an S- or T-shaped cross section.

4. Installation according to any one of the preceding claims, **characterised in that** the main lower and/or upper roller (13a, 13b) is arranged on the same axis as the respective supplementary lower and/or upper roller (14a, 14b).

5. Installation according to any one of the preceding claims, **characterised in that** the plate (10) is rotatable about the axis (A-A').

6. Installation according to any one of the preceding claims, **characterised in that** the winding means comprises a support member (23) which is to support the main profile (8a) and the supplementary profile (8b).

7. Installation according to claim 6, **characterised in that** the support member (23) comprises a mandrel which is movable about the axis (A-A').

8. Installation according to claim 7, **characterised in that** the installation comprises a drive device for driving the mandrel, allowing said mandrel to be driven at a speed of rotation which is at least forty times lower than the speed of rotation of the plate (10).

9. Installation according to any one of claims 6 to 8, **characterised in that** the winding means comprises a plurality of pressing members (24) arranged around the support member (23).

10. Installation according to any one of the preceding claims, **characterised in that** it comprises a main unwinder (25a) for the main strip (81a) and a secondary unwinder (25b) for the supplementary strip (81b), said main and secondary unwinders (25a, 25b) being arranged on the plate (10) upstream of the first and second profiling sections (11, 12).

11. System (100) for manufacturing a flexible pipe (2), comprising:
- an installation (1) for manufacturing a reinforcing structure (8) according to any one of claims 1 to 10,
- a device (101) for manufacturing an inner sealing sheath (3),
- a device (102) for manufacturing a tensile armour ply (5).

12. Method for implementing an installation (1) for manufacturing a reinforcing structure (8) of a flexible pipe (2) for transporting a petroleum and/or gas fluid in an underwater environment, which method comprises the following steps:
- (a) arranging a first profiling section (11) for profiling a main strip (81a) on a plate (10), said first profiling section (11) comprising at least one main profiling head (13) comprising at least one pair of main lower and upper rollers (13a, 13b) capable of bending said main strip (81a),
- (b) arranging a second profiling section (12) for profiling a supplementary strip (81b) on said plate (10), said second profiling section (12) comprising at least one supplementary profiling head (14) comprising at least one pair of supplementary lower and upper rollers (14a, 14b) capable of bending said supplementary strip (81b), said pair of supplementary lower and upper rollers (14a, 14b) being mounted so as to rotate freely relative to said plate (10),
- (c) driving said at least one main profiling head (13),
- (d) profiling said main strip (81a) within said first profiling section (11) to form a main profile (8a) and said supplementary strip (81b) within said second profiling section (12) to form a supplementary profile (8b),
- (e) winding said main profile (8a) and said supplementary profile (8b) around a winding means to form said reinforcing structure (8).
